# EUROPEAN PATENT APPLICATION

(11) **EP 2 314 864 A2**
(43) Date of publication of application: **27.04.2011**
(21) Application number: 10013934.4
(22) Date of filing: 25.10.2010
(51) Int. Cl.: F03B 13/22

(54) **Wave energy device**

(30) Priority: 26.10.2009 GB 0918764
(71) Applicant: Wave Energy Developments Limited, Canonbie Dumfriesshire DG14 0RA (GB)
(72) Inventor: Hillmann, Mark Frederic, Carlisle CA5 6HE (GB)
(74) Representative: Brooks, Nigel Samuel

(57) **Abstract**

Device for converison of wave energy to electricity comprising generating breakwater (1) has a pressure duct (2) of steel plate, with a closed upstream end (3) and a turbine and generator (4) at the downstream end. In use it is anchored via cables (5) to face obliquely into the direction (W) of incident waves. Along the length of the duct are arrayed wave collectors (6), which face obliquely with respect to the length of the duct, whereby the length of upstream sides (7) of the collector to upstream ends (8) of bends (9) is greater than downstream sides (10), the bends connecting the trumpets to the duct. The sides are interconnected, one downstream one to the next upstream one along the length of the device. The bends (9) are narrower at their upstream ends than the mouths (11) of the collectors, giving the latter a tapered shape in plan. Bottom (12) and top (14) sides of the collectors also taper, in elevation.

## Description

This invention relates to a device adapted to convert wave energy to electricity and normally, but not always, act as a breakwater.

For the avoidance of doubt, as used herein, "wave energy" means energy of water waves at the surface of a body of water, such as sea water or inland water. Insofar as the invention relates to a buoyant device, the term "mean water level" means the level of water at which the device floats when in still water.

Breakwaters are commonly massive structures, protecting harbours or stretches of coastline. Solid structures can reflect wave energy rather than absorb it, requiring an elaborate breakwater configuration to provide calm conditions. Breakwater construction in recent years has ranged from ports and marinas to beach groynes for erosion control.

Known generators intended to harness wave energy often rely on vertical wave movement and employ wave induced vertical flexing to drive a generator hydraulically. Considering that wave energy density can be higher for forwards-moving, kinetic energy, we believe that this approach is inefficient.

The object of the invention is to provide a device which acts both as a breakwater and a generator of electricity, with the proviso that the device is likely to find application where its generating attributes outweigh its breakwater attributes.

According to the invention there is provided a device for conversion of wave energy to electricity, the device having length and comprising:
- buoyancy for floatation of the device,
- means for anchoring the device with its length oblique to a direction of wave travel towards the device,
- a duct arranged longitudinally of the device and having:
   - a closed end at one end of the device,
   - a plurality of inlets to the duct spaced along its length and
   - an outlet spaced from the closed end,
- a plurality of wave water collectors arrayed along the device, the collectors having:
   - collection ends with mouths for collecting incident waves and dividing its water into portions and
   - delivery ends for feeding water flow from them into the duct via respective inlets,
- a plurality of non-return valves and air release valves at the delivery ends arranged for allowing flow from each collector into the duct without back flow into neighbouring collectors and
- a turbine and generator arranged at the outlet of the duct for converting energy of water flowing in the duct to electricity,
   the arrangement being such that with the device anchored obliquely to the wave travel:
- incident waves are divided into portions, which contribute to water flow in the duct towards the outlet, and
- energy from this flow is converted to electricity by the turbine and the generator.

Preferably, the buoyancy is such that an outlet from the turbine is at least partially above mean water level.

Normally, the mouths will be aligned with the duct and oblique to wave travel direction, when the duct is oblique thereto. However, we envisage that the mouths can be oblique to the duct and alignable with wave travel direction with the duct oblique thereto.

Preferably, the device includes a wave beach extending along the device at mouths of the wave collectors, the wave beach sloping from a deep edge furthest from the duct to a shallow edge at its connection to the collection ends of the wave collectors. This arrangement accelerates a wave front as it passes up the beach towards the collection conduits. Whilst being undivided, the beach can be contoured to direct the wave front into the mouths. However, since the effect of the beach is expected to be an acceleration of the wave front in the direction towards the mouths as opposed to along the device, thus in the presently preferred the embodiments described in more detail below the wave beach is plain and the mouths are all aligned.

Stiffeners for the wave beach can extend from the mouths of the collection ends to the deep edge of the beach. Normally, the collection ends have bottoms sloping more shallowly than the wave beach.

In the preferred embodiments, the wave water collectors each includes a closed top conduit between it collection end and its delivery end.

Where as expected the wave flow fills the surge pipe from top to bottom, the water can be expected to drive air in front of it. Accordingly in the preferred embodiments, the closed conduits have means for release from them of air confined below their closed tops and driven along them in front of wave portions flowing in them. The air release means can be a blow hole in each conduit at its end connected to the duct, the blow hole being sized for ready flow of air, but too small for escape of a substantial portion of the water flowing in the pipe. Preferably, the air release means is a non-return valve in each conduit at its delivery end, arranged to close under action of water pressure within the conduit.

Further, the conduits can have drain apertures biased against flow of water towards the duct through them and in favour of flow through them of water flowing towards the collection ends. The drain apertures can be louvres in bottoms of the conduits, the louvres preferably being normally below mean water level.

The conduits can be curved at their delivery ends. However, preferably, they are straight at their delivery ends, meeting the duct perpendicularly or obliquely. Nevertheless, in one embodiment, discrete bends are provided between the convergent mouths and the duct, to turn the wave flow from its incident direction to the direction of the duct.

Preferably, bottoms of the conduits will slope upwards towards the duct, less steeply than the wave beach and the bottoms of the collection ends, when a wave beach is provided. Again, preferably, the conduits taper in their cross-section from their collection ends to their delivery ends, the taper being in either or both of the height and the width of the conduits. The degree of taper from the mouths of the wave collectors to the connections can be appreciable with the result that the forward velocity of the water entering the duct is such that its velocity head readily overcomes the inertia of the water already in the duct. The energy of the fast moving surge is passed to the duct water which moves forwards with a steadier average speed as the surge passes down the duct. The degree of taper can be from collection end to delivery end between 30 to 1 and 3 to 1 and preferably is between 10 to 1 and 5 to 1.

The result of the tapering is that the portion of the wave front and the water flowing behind it, which is divided off into each conduit, accelerates as it passes along the conduit towards the duct. Conveniently a constant cross-section surge pipe is provided between the inner end of the tapering portion of the conduit and its inlet to the duct. This arrangement is expected to enable a surge of high kinetic energy water to pass quickly into the duct under its momentum, contributing to a steady flow in the duct, the flow in the duct being made up of successive surges from successive portions of an incident wave.

The conduits can include constant cross-section surge pipe sections at their delivery ends.

It is envisaged that the collectors could be sub-divided in their flow path to the duct, more than one inlet being provided for each collector, one inlet and one non-return valve being provided for each sub-division of each flow path. However, preferably, the wave collectors, inlets and non-return valves are provided on a one-to-one basis, that is with the same number of inlets, collectors and non-return valves.

Conveniently, the buoyancy is such that the duct has a small air space along its top, whereby incident wave surges can pressurise the air to smooth pressure variations in the water, the air being pressurised on surge entry and pressurising the water for its expulsion through the turbine between incident surges. The air space can result from the height of the duct and/or from presence of air entrained with the wave surges.

Again, preferably, the length of the duct is a multiple of the wave length of expected incident waves, whereby at least two and preferably three waves can be expected to be incident with the collectors and feeding water into the duct at any one time. The water in the end of the duct remote from the turbine, the closed, upstream end, will be static after a wave has passed the wave collectors associated with this part of the duct and the trough following behind the wave has reached these collectors. Ahead of the wave, the water in the duct will be flowing with a velocity corresponding with the energy of the wave. Ahead of the wave in front, the average velocity of the water in the duct flowing towards the turbine will be doubled, two waves worth of collected water being behind it. Nevertheless, two waves following each other are seldom the same size and the water velocity in the duct will vary accordingly. Thus the doubled velocity should not be thought of as exactly twice the single wave velocity.

In some embodiments, the outlet from the duct and the turbine and generator are at the opposite end of the duct from the closed end. However, we now prefer that the duct has two closed ends and the outlet from the duct and the turbine and generator are between the two closed ends.

In an embodiment intended for the Irish Sea where typical wave length is 20m, but can reach 50m, the duct is preferably at least 70m long whereby at least one wave is incident with it at any one time. This arrangement gives two or three waves incident with the device at any one time and contributing to flow in the duct.

Whilst it can be envisaged that the device could be installed in a fixed structure, preferably it will be a floating device, free to float up and down with the tide.

To help understanding of the invention, a specific embodiment thereof will now be described with reference to the accompanying drawings in which:
Figure 1 is a plan view of a generating breakwater of the invention;
Figure 2 is a plan view on a larger scale of the generating breakwater of Figure 1;
Figure 3 is a cross-sectional view of the generating breakwater of Figure 1;
Figure 4 is a plan view of a section of a second generating breakwater in accordance with the invention;
Figure 5 is a cross-sectional view on the line V-V in Figure 4;
Figure 6 is a plan view of another generating breakwater of the invention;
Figure 7 is a scrap view of sections of the generator of Figure 6 on a larger scale;
Figure 8 is an end view of the generator of Figure 6;
Figure 9 is a plan view of a further wave energy device of the invention;
Figure 10 is a scrap view of sections of the device of Figure 9 on a larger scale; and
Figure 11 is an end view of the generator of Figure 9.

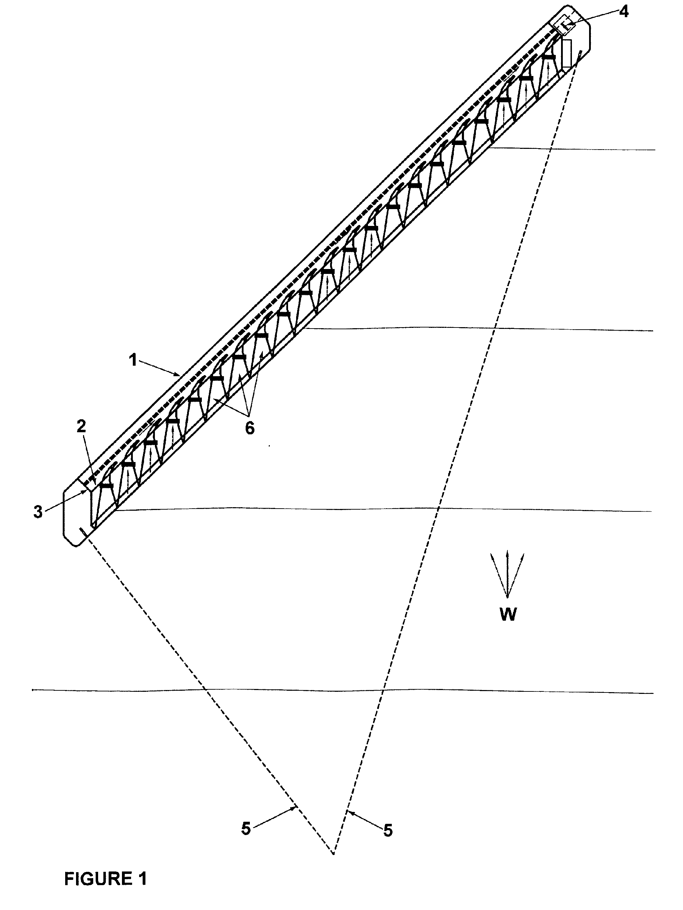

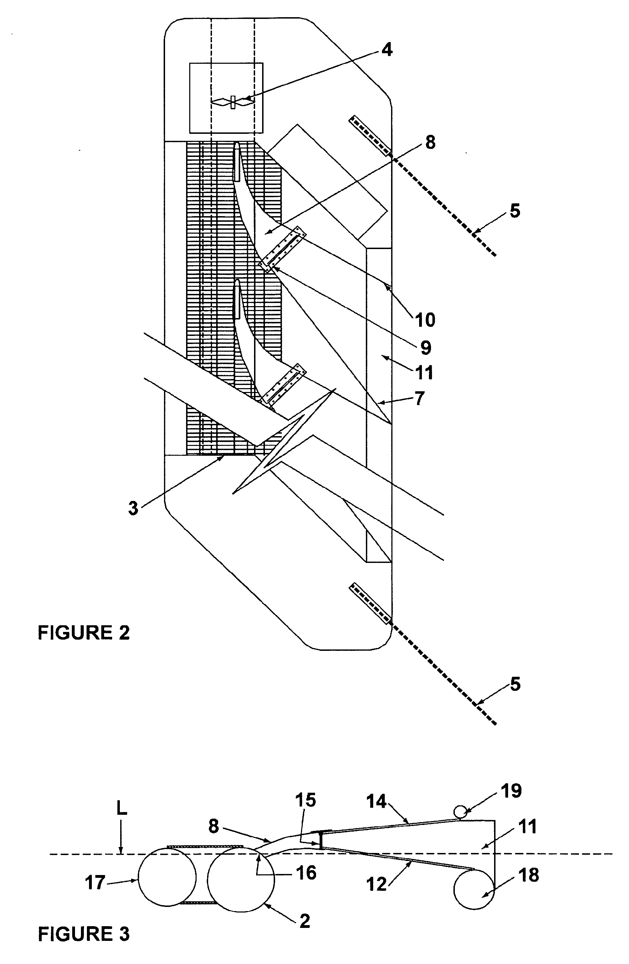

Referring first to Figures 1 to 3 of the drawings, the generating breakwater 1 thereshown has a pressure duct 2 of steel plate, which is 70 metres long. It is has a closed upstream end 3 and a turbine and generator 4 at the downstream end. In use it is anchored via cables 5 to face obliquely into the direction W of incident waves.

The along the length of the duct are arrayed wave collectors 6, which are generally trumpet shaped, albeit with rectangular as opposed to circular cross-sections. The collectors face obliquely with respect to the length of the duct, whereby the length of upstream sides 7 of the collector to upstream ends 8 of bends 9 is greater than downstream sides 10, the bends connecting the trumpets to the duct. The sides are interconnected, one downstream one to the next upstream one along the length of the device. The bends 9 are narrower at their upstream ends than the mouths 11 of the collectors, giving the latter a tapered shape in plan.

Bottom 12 and top 14 sides of the collectors also taper, in elevation.

Non return flap valves 15 are provided at the upstream ends of the bends, whereby water can flow into the bends from the collectors but not out again.

The bends continue to taper in plan and elevation, to slots 16 in the top of the duct, where the bends are connected to the duct. The arrangement is such that water from the forwards travelling portion of an incident wave is funnelled into the duct, with increasing speed as it approaches the duct.

The duct is welded to a floatation tube 17 along side it. A further floatation tube 18 is provided beneath the bottom sides of the collectors at their mouths 11. A beam 19 extends along the top sides 14 at the mouths 11 reinforcing the structural integrity of the structure. The flotation tubes support the duct with a small nominal air space inside it above the mean water level L. The mouths are supported with the level L one third of the height from the bottom to the top sides at the mouth.

At their connection to the duct, the bends have one third of the height of the mouths and one tenth of their width.

In use incident wave water enters the successive mouths along the duct. It flows past the valves and into the duct. When the water at the valves loses forwards momentum the valves close, whereby the only flow is in the duct. The captured water flows out through the turbine and generator.

The device calms the water behind it. In the event of waves being higher than the mouths of the collectors, the top portions of the waves pass over the top of the device.

In areas where waves of a size likely to cause damage are envisaged, then a mooring system with a release mechanism to allow the unit to be anchored from one end in those conditions would be provided.

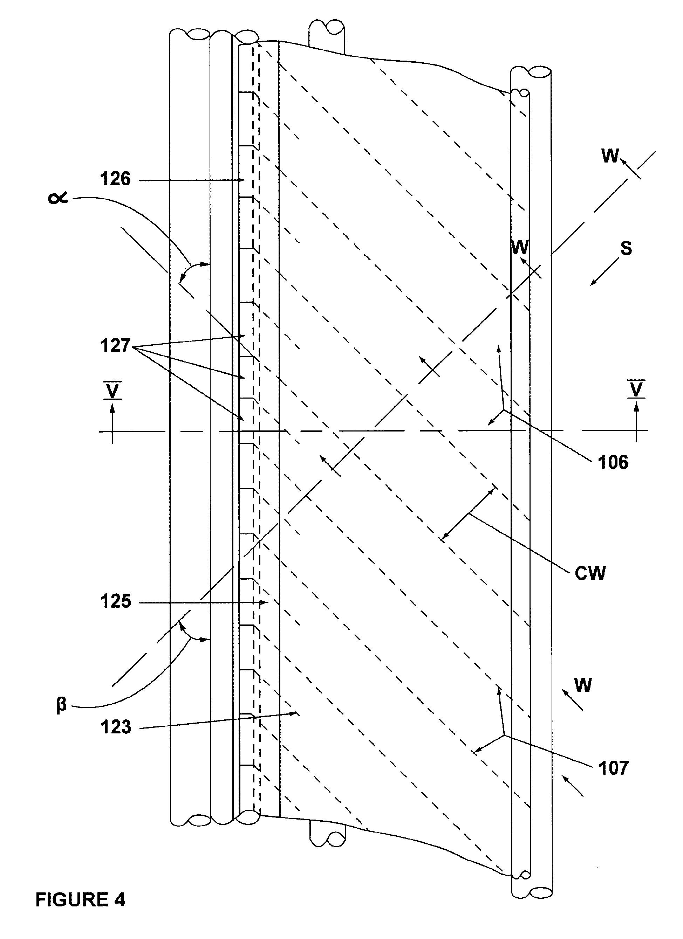

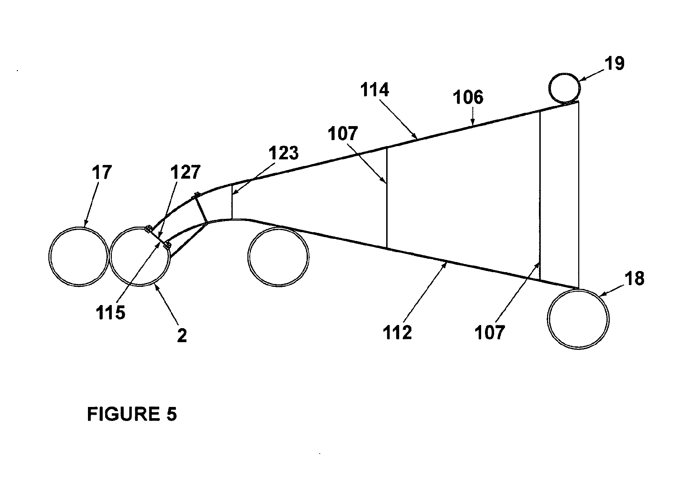

Turning now to Figures 4 and 5, the generating breakwater thereshown differs from that of the first embodiment in that its wave collectors 106 whist still tapering in their height towards the duct 102 are of constant width CW. Neighbouring collectors share common sides 107, which are all of the same length. Being arranged in the direction W of wave travel towards the breakwater and at an angle α to the duct, they appear staggered viewed from one side S with respect to the wave travel.

Between the sides 107 within each collector, a divider 123 is provided. These are continued back to the duct. Thus a portion of a wave entering an individual collector 106 is divided into two before entering the duct. This avoids a tendency to swirl sideways to the down stream inner corner 125 of the collector.

The bottoms 112 and tops 114 of the collectors are flat at their mouths and converge towards the duct. As they approach the duct, they are curved to meet the duct substantially radially on opposite sides of a slot 126, which is divided by the sides 107 and the dividers 123 into a series of individual inlets 127. The sides and the dividers meet the duct at an angle α, which is complementary to the angle β of the mouths. i.e. the wave front extent (not its direction of travel), to the direction of the duct 102. In practice both α and β can be 45°. Thus the water in waves is turned in its flow direction through 45°between entering the collectors and flowing down the duct to the turbine (not shown specifically in this embodiment).

Each inlet is provided with a flap valve 115.

Compared with the first embodiment, this second embodiment feeds the wave water at a steadier lower velocity into the duct, although nevertheless the overall flow rate at the turbine remains the same for the same wave front being collected.

Floating breakwater units could be anchored in an area to give protection against waves. By absorbing a large proportion of wave energy this would be a significant improvement over passive floating breakwaters. This could apply to harbours or marinas or lengths of coast where erosion is a problem. It could also be used where boat access is required for maintenance, eg at offshore wind farms.

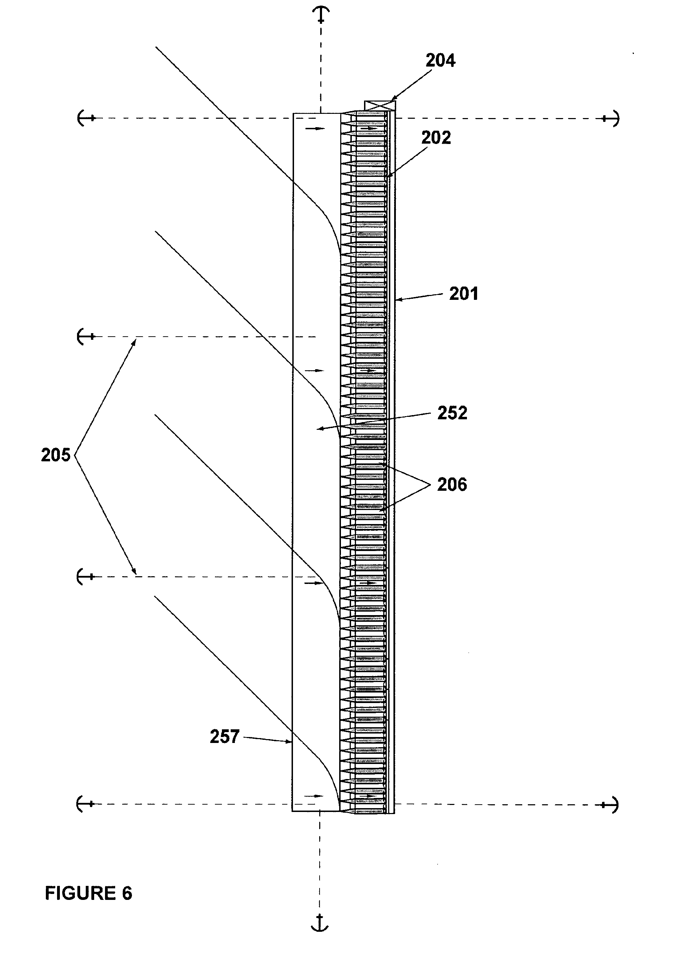

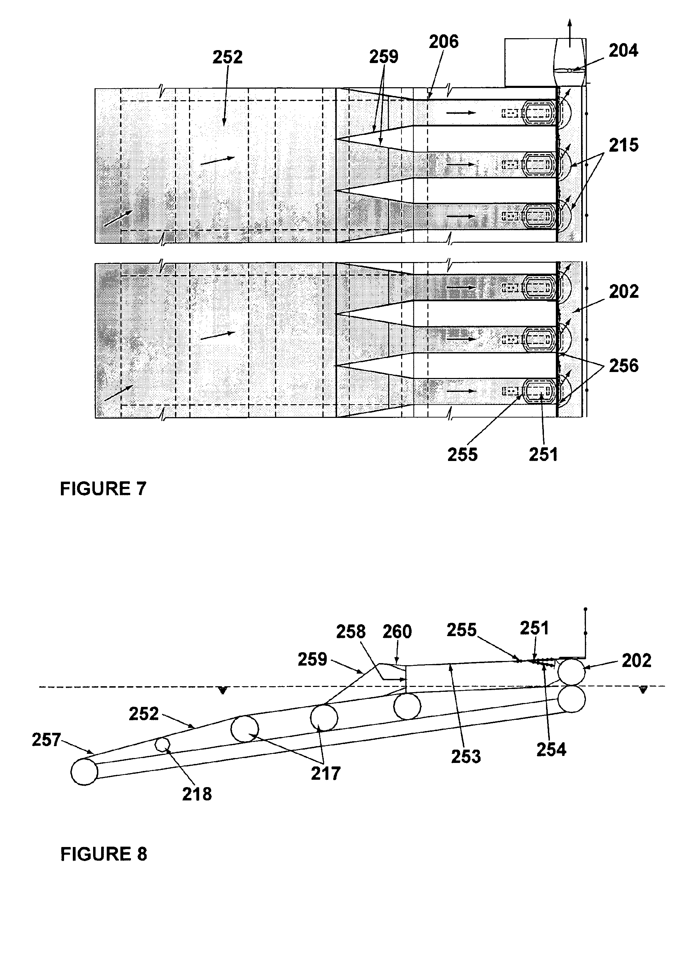

Turning on to Figures 6 to 8, the generating breakwater 201 shown there is simpler in certain respects than those described above. In particular the collection conduits 206 are straight. They are however provided with air release valves 251 and a wave beach 252 in front of the mouths of the conduits.

In more detail, the device has five large floatation tubes 217 and an additional smaller tube 218. The wave beach, which consists of steel plate, and a main duct 202 are supported with the normal water level just at the bottom of the duct 202 which has a half metre diameter. The device is 70m long. Support with the normal water level just at the bottom of the duct allows free flow of the captured water from the turbine and generator 204 at the outlet end of the duct.

The conduits 206 each comprise a 3m long nominally horizontal surge pipe 253, each having an air release valve 251, which is essentially a large flap valve 254 hinged 255 at the top of the pipe at the end of the flap remote from the duct 202. The flap is normally open allowing air to flow in and out to the pipe until a surge of water lifts the flap and closes the valve. At the ends of the pipes, the duct has similar non-return valves 215. These have vertical hinge axes 256 remote from the generator. Their flaps are limited to open no more than 45°, thereby directing a surge of water entering the duct from the relevant surge pipe 253 towards the generator. These valves are sprung closed.

The wave beach extends 6m from the outer end of the surge pipes and is 1.5m below the normal water level at its edge 257. It slopes up slightly more steeply for its first 3m and then slightly less steeply to be just below normal water level at the mouths 258 of the surge tubes. Collecting plates 259 extend down the beach somewhat from the ends of the surge tubes. The later are at 1m centres and the collection plates diverge to meet on the median planes between the pipes. They extend above the pipes immediately outside the mouths and taper down, having roof plates 260 to contain a reasonable amount of wave water liable to break over the end of the pipes. In event of unusual waves, these can break over the pipes and dissipate between them.

Anchor cables 205 are shown.

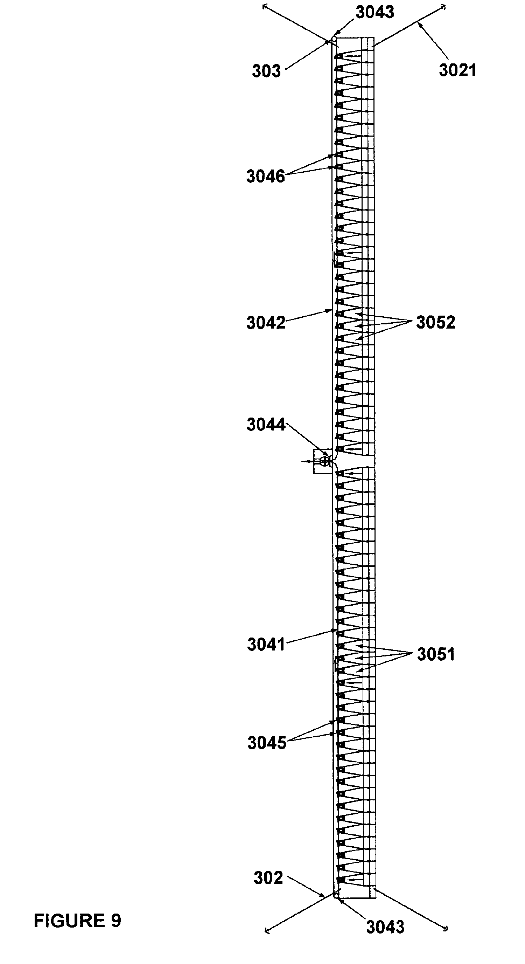

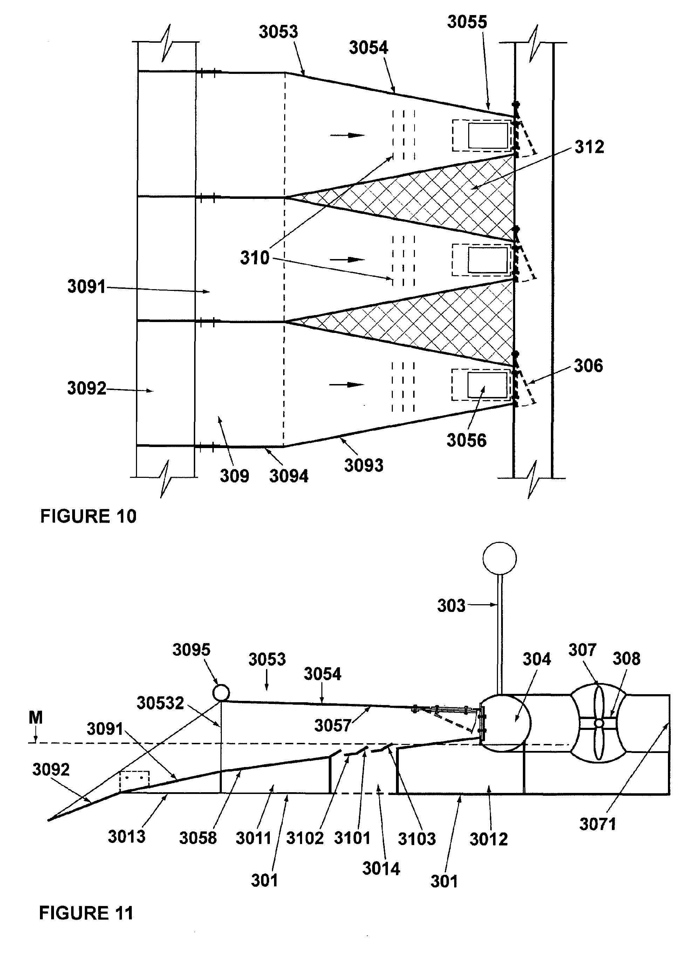

The fourth embodiment shown in Figures 9, 10 & 11, is simpler still in some respects. It comprises:
- buoyancy 301, in the form of two elongate tanks 3011,3012, extending the length of the device;
- anchoring means 302, including eyes on the device which are too small to be seen in Figure 9. Anchor lines 3021 are shown. Upstanding markers 303 are provided at opposite ends of the device;
- a main duct 304, provided in two halves 3041, 3042, each having closed remote ends 3043 and open inner ends 3044. Two series of inlets 3045, 3046 are provided along the lengths of the halves. The bottom of the duct is level with the mean calm water level M;
- wave collectors 3051,3052, provided along the device, in one-to-one relationship with the inlets. Each collector has a collection end 3053 with a mouth 30532, a tapering conduit portion 3054 and a delivery end 3055. Air release valves 3056 are arranged in the top 3057 of the delivery ends. The tops of the collectors are normally flat and bottoms 3058 slope down towards the mouths;
- non-return valves 306 at the junction of the collectors with the duct halves;
- a turbine 307 connected to both duct halves to receive flow from both. The turbine and generator 308 with outlet 3071 are above the calm weather water level;
- a wave beach 309 extending out from the mouths. It has an inner portion 3091 connected to the bottoms of the collectors at the mouths and inclined down slightly more steeply, and an outer portion 3092 connected to the proximal portion and inclined down even more. The sides 3093 of neighbouring collectors meet at their mouths and a continued down the beach as dividers 3094 which stiffen and support the beach. The tops of the mouth are stabilised by a stiffening pipe 3095. The buoyancy tank 3011 has a tapered portion 3013, which extends under the inner portion 3091 of the beach;
- drain apertures 310 in the bottoms of the conduit portions, with transverse louvres 3101. These are attached to portions 3102 of the bottoms at their edges 3103 closer to the mouths and are free and spaced above the bottoms at their edges closer to the duct. Normally the apertures and louvres are below the mean water level M, with the result that wave water can surge over the top of them with little tendency to flow out through the louvres. When the residue of the surge that did not pass into the duct is draining out, it can flow back through the louvres. They coincide with the gap 3014 between the buoyancy tanks 3011,3012;
- Flooring 312 level with the tops of the conduits and between the collectors to provide a level deck to the device.

## Claims

1. A device for conversion of wave energy to electricity, the device having length and comprising:
• buoyancy for floatation of the device,
• means for anchoring the device with its length oblique to a direction of wave travel towards the device,
• a duct arranged longitudinally of the device and having:
• a closed end at one end of the device,
• a plurality of inlets to the duct spaced along its length and
• an outlet spaced from the closed end,
• a plurality of wave water collectors arrayed along the device, the collectors having:
• collection ends with mouths for collecting incident waves and dividing its water into portions and
• delivery ends for feeding water flow from them into the duct via respective inlets,
• a plurality of non-return valves and air release valves at the delivery ends, arranged for allowing flow from each collector into the duct without back flow into neighbouring collectors and
• a turbine and generator arranged at the outlet of the duct for converting energy of water flowing in the duct to electricity,
the arrangement being such that with the device anchored obliquely to the wave travel:
• incident waves are divided into portions, which contribute to water flow in the duct towards the outlet, and
• energy from this flow is converted to electricity by the turbine and the generator.

2. A wave energy device as claimed in claim 1, wherein the buoyancy is such that the non-return valves are at least partially above water level in calm conditions.

3. A wave energy device as claimed in claim 1 or claim 2, wherein the mouths are aligned perpendicular to the duct and oblique to wave travel direction, when the duct is oblique thereto.

4. A wave energy device as claimed in claim 1, claim 2 or claim 3, including a stiffened wave beach extending along the device at mouths of the wave collectors, the wave beach sloping from a deep edge furthest from the duct to a shallow edge at its connection to the collection ends of the wave collectors.

5. A wave energy device as claimed in claim 4, wherein the wave collectors have bottoms sloping more shallowly than the wave beach.

6. A wave energy device as claimed in any preceding claim, wherein the wave water collectors each includes a closed top conduit between its collection end and its delivery end with a means for release of air confined below their closed tops and driven along them in front of wave portions flowing in them.

7. A wave energy device as claimed in claim 6, wherein the air release is a non-return valve in each conduit at its delivery end, arranged to be closed by water pressure within the conduit.

8. A wave energy device as claimed in claim 6 or claim 7, wherein the conduits have drain apertures or louvers in the floor to accelerate release of water between the waves.

9. A wave energy device as claimed in any one of claims 6 to 8, wherein the conduits are straight or curved at their delivery ends, meeting the duct perpendicularly or obliquely.

10. A wave energy device as claimed in any one of claims 6 to 9, wherein the conduits taper in their cross-section from their collection ends to their delivery ends between 30 to 1 and 3 to 1.

11. A wave energy device as claimed in any preceding claim, wherein the wave collectors, inlets and non-return valves and air valves are provided on a one-to-one basis, that is with the same number of inlets, collectors and non-return valves and air valves.

12. A wave energy device as claimed in any preceding claim, wherein the collectors are sub-divided in their flow path to the duct, more than one inlet being provided for each collector, one non-return valve and one air valve being provided for each sub-division of each flow path.

13. A wave energy device as claimed in any preceding claim, wherein the buoyancy is such that the duct has an air space along its top, whereby incident wave surges can pressurise the air to smooth pressure variations in the water, the air being pressurised on surge entry and pressurising the water for its expulsion through the turbine between incident surges.

14. A wave energy device as claimed in any preceding claim, wherein the length of the duct is a multiple of the wave length of expected incident waves, whereby at least two and preferably three waves can be expected to be incident with the collectors and feeding water into the duct at any one time.

15. A wave energy device as claimed in any preceding claim, wherein the outlets from the duct to the turbines and generators can vary from one at the opposite end of the duct from the closed end, to a central outlet with two closed ends or multiple units spaced along the duct.
